Europäisches Patentamt

European Patent Office

Office européen des brevets

(19)

(11) EP 0 842 963 A1

(12) DEMANDE DE BREVET EUROPEEN

(43) Date de publication:
20.05.1998 Bulletin 1998/21

(51) Int Cl.⁶: **C08G 18/50, C08G 18/83**

(21) Numéro de dépôt: 97440101.0

(22) Date de dépôt: 06.11.1997

(84) Etats contractants désignés:
AT BE CH DE DK ES FI FR GB GR IE IT LI LU MC
NL PT SE
Etats d'extension désignés:
AL LT LV MK RO SI

(30) Priorité: 13.11.1996 FR 9614004

(71) Demandeur: **Emfi SA**
**67500 Haguenau (FR)**

(72) Inventeur: **Crenn, Michel**
**95130 Franconville (FR)**

(74) Mandataire: **Nuss, Pierre et al**
**10, rue Jacques Kablé**
**67080 Strasbourg Cédex (FR)**

(54) **Procédé de désactivation temporaire d'un composé chimique à hydrogène actif et composition chimique obtenue**

(57) La présente invention a pour objet un procédé de désactivation temporaire d'un composé chimique à hydrogène actif et une composition chimique obtenue en mettant en oeuvre ce procédé.

Procédé caractérisé en ce qu'il consiste à réaliser un masquage de la ou des fonction(s) hydrogène actif par réaction avec un agent de silylation, de manière à obtenir un composé à hydrogène actif silylé.

La présente invention est notamment applicable dans le domaine des produits d'étanchéité ou de collage.

EP 0 842 963 A1

**Description**

La présente invention concerne le domaine de la chimie, plus particulièrement de la chimie réactionelle et des polymères, et a pour objet un procédé d'inactivation temporaire d'un composé chimique à hydrogène actif et une composition chimique obtenue en mettant en oeuvre ce procédé.

Il existe actuellement de nombreux produits chimiques obtenus par réaction d'un composé présentant une fonction hydrogène actif, avec un ou plusieurs autre(s) composés chimique(s).

On entend par composé à hydrogène actif ou à fonction hydrogène actif un composé dont un atome d'hydrogène est remplaçable par un métal ou peut réagir avec le réactif de Zerewitinoff (Iodure de méthylmagnésium).

Or, dans certains cas, il est nécessaire, ou souhaitable, de différer ou de retarder la réaction faisant intervenir la fonction hydrogène actif.

Ceci est notamment le cas lorsque le composé à hydrogène actif est mélangé à un ou plusieurs autre(s) réactif (s) et que le mélange multicomposant résultant doit être conservé en l'état, jusqu'au moment de l'application ou de la mise en oeuvre souhaitée du produit final dont l'obtention par réaction mutuelle des composants doit être la plus aisée et la plus rapide possible.

Le problème général posé à la présente invention concerne, par conséquent, la conception d'un procédé, et d'une composition en faisant application, permettant l'inactivation ou la désactivation de la ou des fonction(s) hydrogène actif d'un composé chimique, susceptible d'être associé à au moins un autre réactif pour former un mélange multicomposant stable dans le temps et apte à former par réaction le produit final, de manière aisée et rapide, à tout moment.

Pour résoudre le problème précité, la présente invention propose, en premier lieu, un procédé de désactivation au moins temporaire de la ou des fonctions(s) hydrogène actif d'un composé chimique, caractérisé en ce qu'il consiste à réaliser un masquage de la ou des fonction(s) hydrogène actif par réaction avec un agent de silylation, de manière à obtenir un composé à hydrogène actif silylé.

Selon un mode de réalisation préférentiel, le composé chimique comportant la fonction hydrogène actif appartient au groupe formé par les polyols, les polyamines, les thiols et les polyamides et l'agent de silylation est choisi dans le groupe formé par les triméthyls silyls, les trialkyls silyls, les alkoxy dialkylsilyls, les bis(trialkylsilyl) cycliques et les silylènes, le composé à hydrogène actif silylé pouvant être régénéré par simple hydrolyse en présence d'eau

L'invention a également pour objet un procédé de préparation, de stockage et de mise en oeuvre d'une composition chimique comprenant au moins un composé présentant au moins une fonction hydrogène actif, caractérisé en ce qu'il consiste à effectuer tout d'abord un masquage, par réaction avec un agent de silylation, de la ou des fonction(s) hydrogène actif du ou des composé(s) concerné(s), puis à réaliser un mélange homogène et proportionné de ce ou ces dernier(s) avec au moins un autre composé adapté pour former par réaction mutuelle le produit final souhaité, à introduire et à stocker le mélange précité dans un contenant étanche, notamment à l'abri de l'humidité de l'air, et, enfin, lors de l'application de la composition chimique précitée, à extraire dudit contenant et à exposer à l'humidité de l'air une quantité déterminée dudit mélange de manière à supprimer le masquage par hydrolyse et permettre la réaction entre les composés pour former le produit final.

Dans le cas d'une application dans le domaine des polymères de synthèse, plus particulièrement des produits d'étanchéité ou de collage, il peut être avantageusement prévu que le mélange proportionné précité comprend un premier composé présentant une fonction hydrogène actif et choisi dans le groupe formé par les polyols, les polyamines, les thiols et les polyamides, et un second composé choisi dans le groupe formé par les polyisocyanates et les prépolymères d'isocyanate.

Enfin, l'invention concerne également une composition chimique à au moins deux constituants, caractérisée en ce qu'elle comporte au moins un composé présentant au moins une fonction hydrogène actif masquée par sylilation, associé ou mélangé à au moins un autre composé destiné à réagir avec ledit composé à hydrogène actif après démasquage de ce dernier.

Conformément à un mode de réalisation préféré de l'invention, ladite composition est constituée, par l'association, d'une part, d'un premier composé choisi dans le groupe formé par les polyisocyanates et les prépolymères d'isocyanate et, d'autre part, d'un second composé comportant au moins un hydrogène actif masqué par silylation, pouvant être régénéré par hydrolyse.

Il a été constaté que le composé à hydrogène actif masqué par silylation s'hydrolysait très rapidement au contact de l'humidité de l'air et régénérait le composé de départ, cette réaction d'hydrolyse étant plus rapide que la réaction isocyanate / eau.

Ainsi, dès son exposition à l'humidité de l'air, le composé à hydrogène actif masqué peut, immédiatement après hydrolyse, réagir avec le polyisocyanate ou le prépolymère d'isocyanate auquel il est mélangé pour former le produit final souhaité.

Les polyisocyanates pouvant être utilisés dans le cadre de la présente invention comprennent les isocyanates ayant au moins deux groupes isocyanates par molécule et sont notamment décrits dans les documents US-A-3 350 362 et US-A-3 382 215.

Les polyisocyanates de nature polymérique mentionnés précédemment comprennent les prépolymères d'isocyanate obtenus par réaction d'un polyisocyanate avec un composé à hydrogène actif.

En vue d'aboutir à la formation de polymères spécifiques en tant que produits réactionnels finaux, notamment du type susceptibles d'application en tant que produits d'étanchéité ou de collage, le composé à hydrogène actif est choisi dans le groupe formé par les polyols, les polyamines, les thiols et les polyamides.

Selon une caractéristique de l'invention, l'agent de silylation est choisi dans le groupe formé par les triméthyls silyls (par exemple : Triméthyl chloro silane, Bis(triméthylsilyl) acétamide ou Méhtyl triméthylsill acétamide), les trialyls silyls (par exemple : Diméthysilyl, Allyldiméthylsilyl, ter-Butyldiméthylsilyl ou Triphénylsilyl), les alkoxy dialkylsilyls, les bis(trialkylsilyl) cycliques et les silylènes (par exemple : Bis(diméthylamino) diméthylsilane).

En vue de l'utilisation pratique de la composition précitée, il peut être avantageusement prévu qu'elle soit stockée, jusqu'à son activation, sous forme de mélange homogène proportionné de ses composantes, dans un contenant étanche, empêchant notamment tout contact dudit mélange avec de l'eau, plus particulièrement avec la vapeur d'eau contenue dans l'air, ce qui permet de conserver ladite composition de manière stable et sous forme de mélange multicomposant, pendant une durée très longue.

En outre, il est possible, en réglant la quantité de composé à hydrogène actif masqué présent dans la composition précitée, d'aboutir à la formation du produit polymère final par l'intermédiaire d'une réticulation hybride obtenue par le déroulement simultané de la réaction isocyanate / composé à hydrogène actif et de la réaction isocyanate / humidité de l'air.

Les caractéristiques du polymère final obtenu peuvent être ajustées et déterminées dans des proportions étendues par le choix notamment du type de composé à hydrogène actif utilisé.

Ainsi, dans le cas particulier de la réalisation, en tant que produit réactionnel final obtenu à partir des deux composés constitutifs de départ, d'un polymère utilisable en tant que produit d'étanchéité ou de collage, il est notamment possible grâce à l'invention d'ajuster le module et la dureté dudit produit final par le choix du composé à hydrogène actif formant agent de pontage (augmentation de la dureté SHORE A par l'utilisation d'un agent de pontage multifonctionnel), d'augmenter nettement l'adhésivité sur les supports (rupture cohésive au lieu d'une rupture adhésive),d'accroître sensiblement la vitesse de réticulation, de limiter le dégagement de gaz carbonique lors de la réticulation en n'autorisat la réticulation qu'avec l'agent de pontage (avantageux dans le cas de supports très humides) et de permettre l'utilisation de prépolymères isocyanates ayant un taux de NCO libre plus élevé, donc une viscosité plus faible ou un taux de VOC plus faible.

A titre illustratif, on décrit ci-après un exemple de réaction mettant en oeuvre le groupe trimethyl silyl :

- phase de blocage du composé à hydrogène actif:

$$(CH_3)_3 - Si - R - Si - (CH_3)_3 + HX - R' - XH \longrightarrow$$

$$(CH_3)_3 - Si - X - R' - X - Si - (CH_3)_3 + R - H_2$$

- phase d'hydrolyse et de régénération du composé à hydrogène actif :

$$(CH_3)_3 - Si - X - R' - X - Si - (CH_3)_3 + H_2O \longrightarrow$$

$$(CH_3)_3 - Si - O - Si -(CH_3)_3 + HX - R' - XH$$

Par ailleurs, la réaction du composé à hydrogène actif avec un isocyanate peut être représentée comme suit :

$$HX - R' - XH + OCN - R'' - NCO \longrightarrow HX - R' - X - NH - CO - R - NCO$$

Bien entendu, l'invention n'est pas limitée au mode de réalisation décrit. Des modifications restent possibles, notamment du point de vue de la constitution des divers éléments ou par substitution d'équivalents techniques, sans sortir pour autant du domaine de protection de l'invention.

**Revendications**

1. Procédé de désactivation au moins temporaire de la ou des fonctions(s) hydrogène actif d'un composé chimique, caractérisé en ce qu'il consiste à différer ou retarder la réaction faisant intervenir la ou les fonction(s) hydrogène actif du composé chimique appartenant au groupe formé par les polyols, les polyamines, les thiols et les polyamides, en réalisant un masquage de la ou des fonction(s) hydrogène actif par réaction avec un agent de silylation, de manière à obtenir un composé à hydrogène actif silylé.

2. Procédé selon la revendication 1, caractérisé en ce que l'agent de silylation est choisi dans le groupe formé par les triméthyls silyls, les trialkyls silyls, les alkoxy dialkylsilyls, les bis(trialkylsilyl) cycliques et les silylènes, le composé à hydrogène actif silylé pouvant être régénéré par simple hydrolyse en présence d'eau

3. Procédé de préparation, de stockage et de mise en oeuvre d'une composition chimique comprenant au moins un composé présentant au moins une fonction hydrogène actif, caractérisé en ce qu'il consiste à effectuer tout d'abord un masquage, par réaction avec un agent de silylation, de la ou des fonction(s) hydrogène actif du ou des composé (s) concerné(s), puis à réaliser un mélange homogène et proportionné de ce ou ces dernier(s) avec au moins un autre composé adapté pour former par réaction mutuelle le produit final souhaité, à introduire et à stocker le mélange précité dans un contenant étanche, notamment à l'abri de l'humidité de l'air, et, enfin, lors de l'application de la composition chimique précitée, à extraire dudit contenant et à exposer à l'humidité de l'air une quantité déterminée dudit mélange de manière à supprimer le masquage par hydrolyse et permettre la réaction entre les composés pour former le produit final.

4. Procédé selon la revendication 3, caractérisé en ce que le mélange proportionné comprend un premier composé présentant une fonction hydrogène actif et choisi dans le groupe formé par les polyols, les polyamines, les thiols et les polyamides, et un second composé choisi dans le groupe formé par les polyisocyanates et les prépolymères d'isocyanate.

5. Composition chimique à au moins deux constituants, caractérisée en ce qu'elle comporte au moins un composé présentant au moins une fonction hydrogène actif masquée par sylilation, associé ou mélangé à au moins un autre composé destiné à réagir avec ledit composé à hydrogène actif après démasquage de ce dernier.

6. Composition chimique selon la revendication 5, caractérisée en ce qu'elle est constituée, par l'association, d'une part, d'un premier composé choisi dans le groupe formé par les polyisocyanates et les prépolymères d'isocyanate et, d'autre part, d'un second composé comportant au moins un hydrogène actif masqué par silylation, pouvant être régénéré par hydrolyse.

7. Composition selon l'une quelconque des revendications 5 et 6, caractérisée en ce que le composé à hydrogène actif est choisi dans le groupe formé par les polyols, les polyamines, les thiols et les polyamides.

8. Composition selon l'une quelconque des revendications 5 à 7, caractérisé en ce que l'agent de silylation est choisi dans le groupe formé par les triméthyls silyls, les trialkyls silyls, les alkoxy dialkylsilyls, les bis(trialkylsilyl) cycliques et les silylènes.

9. Composition chimique selon l'une quelconque des revendications 5 à 8, caractérisée en ce qu'elle est stockée, jusqu'à son activation, sous forme de mélange homogène proportionné de ses composantes, dans un contenant étanche. empêchant notamment tout contact dudit mélange avec de l'eau, plus particulièrement avec la vapeur d'eau contenue dans l'air.

10. Composition chimique selon l'une quelconque des revendications 5 à 9, caractérisée en ce qu'elle forme, après réaction entre ses deux composés constitutifs, un polymère utilisable en tant que produit d'étanchéité ou de collage.

Office européen
des brevets

**RAPPORT DE RECHERCHE EUROPEENNE**

Numéro de la demande

EP 97 44 0101

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DE 15 70 660 A (GENERAL ELECTRIC)<br>* page 1, ligne 1 - page 11, ligne 17; revendication 1 * | 1,2 | C08G18/50<br>C08G18/83 |
| A | US 4 448 939 A (FASOLKA ET AL)<br>* colonne 2, ligne 1 - colonne 10, ligne 44; revendications 1-7 * | 1,2 | |
| A | WO 93 05089 A (BASF)<br>* page 2, ligne 14 - page 6, ligne 29; revendication 1 * | 1 | |

| DOMAINES TECHNIQUES RECHERCHES (Int.Cl.6) |
|---|
| C08G |

Le présent rapport a été établi pour toutes les revendications

| Lieu de la recherche | Date d'achèvement de la recherche | Examinateur |
|---|---|---|
| LA HAYE | 23 décembre 1997 | Bourgonje, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)